# DEMANDE DE BREVET EUROPEEN

(11) **EP 2 040 043 A1**
(43) Date de publication de la demande: **25.03.2009**
(21) Numéro de dépôt: 07301376.5
(22) Date de dépôt: 18.09.2007
(51) Int. Cl.: G01F 1/115, B29C 45/56

(54) **Procédé de fabrication d'un carter de compteur à detection magnétique et carter ainsi obtenu**

(71) Demandeur: Actaris SAS, 92100 Boulogne-Billancourt (FR)
(72) Inventeur: Schleuniger, Mathias, 75020 Paris (FR)
(74) Mandataire: Lenne, Laurence

(57) **Abrégé**

L'invention concerne un procédé de moulage par injection d'un carter (2B), en matière plastique, d'une chambre de mesure (2) d'un compteur à détection magnétique, comportant une paroi dite de transmission (2D), destinée à être disposée entre un élément magnétique (2C) contenu par ladite chambre de mesure et un capteur magnétique (3A) situé dans un totalisateur (3).

Selon l'invention, ladite paroi de transmission (2D) est moulée au moyen d'un piston (P) translatable perpendiculairement au plan de la cavité de moulage de cette paroi.

## Description

L'invention concerne un procédé de fabrication d'un carter de compteur à détection magnétique et un carter ainsi obtenu.

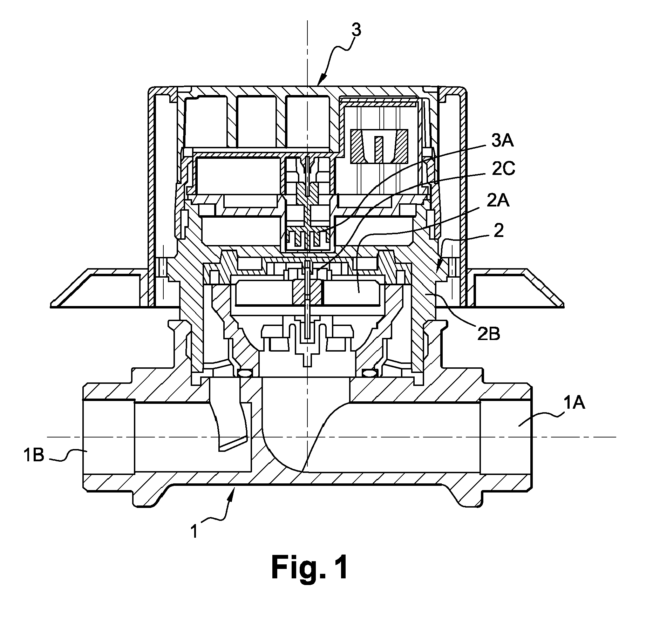

La figure 1 représente un tel compteur connu à détection magnétique destiné à la mesure d'un volume ou d'un débit de fluide, en particulier d'eau.

Ce compteur comporte une bâche 1 en forme d'auge et pourvue d'un tronçon de conduit d'entrée 1A et d'un tronçon de conduit de sortie 1 B. Le tronçon de conduit d'entrée 1A est destiné à être connecté à une canalisation d'arrivée d'eau et le tronçon de conduit de sortie 1B à une canalisation d'évacuation d'eau.

Sur cette bâche, est montée une chambre de mesure 2, ici à turbine 2A, contenue dans un carter 1B. L'axe de la turbine est pourvu d'un premier élément magnétique 2C.

Sur cette chambre de mesure, est disposé un totalisateur 3 qui comporte un afficheur et un compteur connecté à un capteur magnétique 3A destiné à transmettre le nombre de tours de la turbine au compteur.

Pour ce faire, ce capteur 3A est disposé face à l'élément magnétique 2C de la chambre de mesure et est séparé de cet élément 2C par une paroi supérieure du carter 2B qui est amincie au droit de cet agencement magnétique, afin de permettre une bonne transmission du champ magnétique entre l'élément 2C et le capteur 3A.

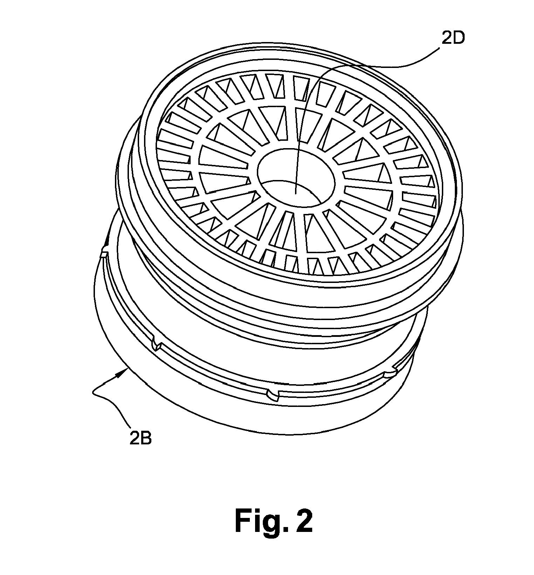

La figure 2 représente un tel carter 2B de chambre de mesure. La paroi supérieure de ce carter présente donc une partie de paroi centrale amincie 2D, dite ci-après paroi de transmission, contre laquelle est logé le capteur magnétique 2C du totalisateur et sous laquelle est disposé l'élément magnétique 2C lié à l'axe de la turbine 2A.

Il est connu de réaliser ce carter 2B en matière plastique, par exemple en polyamide aromatique, par moulage et injection au niveau au centre de la paroi supérieure du carter ainsi moulé, afin d'éviter la formation de lignes de soudure qui seraient préjudiciables à l'étanchéité et à la bonne tenue mécanique du carter soumis à des efforts hydraulique lors du fonctionnement du compteur. Par un tel procédé de moulage, il est possible d'obtenir une paroi de transmission 2D d'une épaisseur d'environ 2,5 mm. Un usinage postérieur peut également permettre de réduire l'épaisseur de la paroi de transmission.

Le but de l'invention est de proposer un procédé de fabrication d'un tel carter qui permette d'obtenir une paroi de transmission d'épaisseur réduite, afin d'assurer une transmission du champ magnétique optimale entre la chambre de mesure et le totalisateur, tout en fournissant un carter résistant mécaniquement aux efforts hydrauliques de fonctionnement du compteur.

Pour ce faire, l'invention propose un procédé de moulage par injection d'un carter, en matière plastique, d'une chambre de mesure d'un compteur à détection magnétique, comportant une paroi dite de transmission, destinée à être disposée entre un élément magnétique contenu par ladite chambre de mesure et un capteur magnétique situé dans un totalisateur, caractérisé en ce que ladite paroi de transmission est moulée au moyen d'un piston translatable perpendiculairement au plan de la cavité de moulage de cette paroi.

Ce procédé de moulage permet, sans aucun usinage, la réalisation d'une paroi de transmission d'une épaisseur particulièrement réduite.

De plus, grâce à ce procédé, l'épaisseur de la paroi de transmission est totalement maîtrisée par déplacement du piston.

Selon un mode de réalisation préféré de l'invention, l'injection est réalisée au moyen d'une entrée d'injection latérale à la cavité de moulage du carter.

L'injection est, de préférence, située hors de la paroi de transmission dans une zone favorisant le remplissage de la cavité par la matière plastique.

L'invention concerne également un carter d'une chambre de mesure d'un compteur à détection magnétique obtenu au moyen du procédé selon l'une des revendications précédentes, caractérisé en ce que ladite paroi de transmission a une épaisseur comprise entre 0,5 et 1,5 mm.

Avantageusement, ladite paroi de transmission a une épaisseur d'environ 1,2 mm

L'invention est décrite ci-après plus en détail à l'aide de figures ne représentant qu'un mode de réalisation préféré de l'invention.

Les figures 1 et 2 ont été déjà été évoquées et illustrent, vu en coupe, un compteur et, vu en perspective, un carter de chambre de mesure.

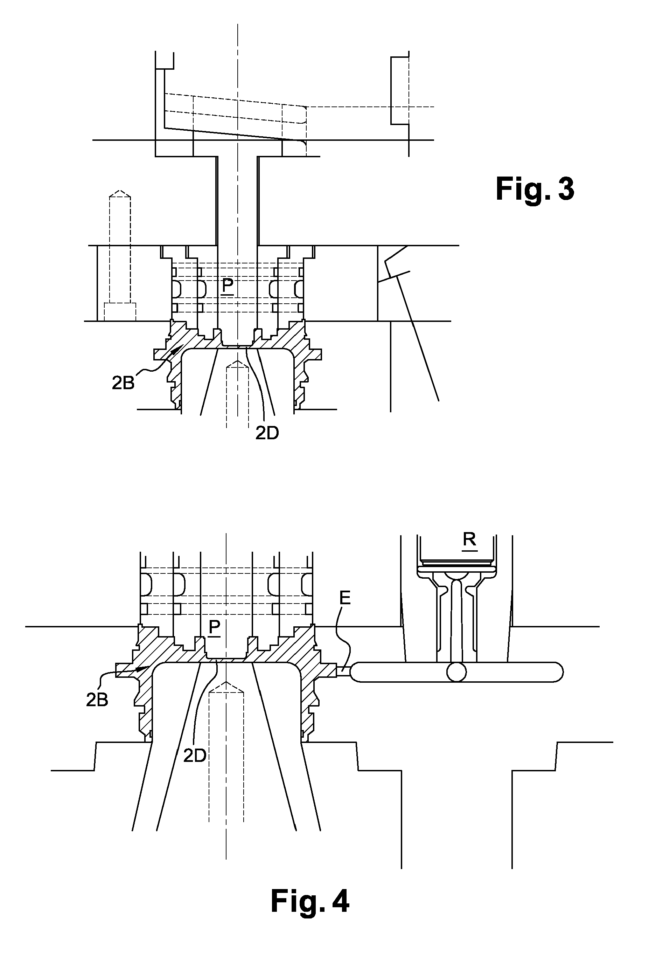

Les figures 3 et 4 sont des vues en coupe d'un appareillage de moulage pour la fabrication d'un carter conforme à l'invention.

Sur ces dernières figures, le moulage est en fin de processus et la cavité de moulage est remplie de matière plastique, par exemple du polyphtalamide, formant un carter 2B.

Le moulage se fait par injection réalisée au moyen d'une entrée d'injection E latérale à la cavité de moulage du carter 2B. Cette entrée E est située à proximité de la cavité de moulage de la paroi supérieure du carter.

La paroi de transmission 2D du carter est moulée au moyen d'un piston P translatable perpendiculairement au plan de la cavité de moulage de cette paroi 2D.

Lors d'une opération de moulage, la matière plastique est injectée sous pression d'un réservoir R vers l'entrée E d'injection et remplit la cavité de moulage du carter. Le piston P est alors arrêté dans une position intermédiaire et est translaté vers la cavité de moulage, lorsque la cavité est complètement remplie ou remplie au delà de la paroi de transmission, puis est arrêté en position finale de moulage, afin de former une paroi de transmission d'une épaisseur comprise entre 0,5 et 1,5 mm, et de préférence d'environ 1,2 mm.

Lors de l'opération de démoulage conséquente, le piston est reculé afin de permettre le démoulage et la séparation des parties de moule.

## Revendications

1. Procédé de moulage par injection d'un carter (2B), en matière plastique, d'une chambre de mesure (2) d'un compteur à détection magnétique, comportant une paroi dite de transmission (2D), destinée à être disposée entre un élément magnétique (2C) contenu par ladite chambre de mesure et un capteur magnétique (3A) situé dans un totalisateur (3), **caractérisé en ce que** ladite paroi de transmission (2D) est moulée au moyen d'un piston (P) translatable perpendiculairement au plan de la cavité de moulage de cette paroi.

2. Procédé selon la revendication précédente, **caractérisé en ce que** l'injection est réalisée au moyen d'une entrée d'injection (E) latérale à la cavité de moulage du carter.

3. Carter (2B) d'une chambre de mesure (2) d'un compteur à détection magnétique obtenu au moyen du procédé selon l'une des revendications précédentes, **caractérisé en ce que** ladite paroi de transmission (2D) a une épaisseur comprise entre 0,5 et 1,5 mm.

4. Carter selon la revendication précédente, **caractérisé en ce que** ladite paroi de transmission (2D) a une épaisseur d'environ 1,2 mm
